# EUROPEAN PATENT SPECIFICATION

(11) **EP 3 536 522 B1**
(45) Date of publication and mention of the grant of the patent: **30.12.2020**
(21) Application number: 19160673.0
(22) Date of filing: 05.03.2019
(51) Int. Cl.: B60C 15/00, B60C 17/00, B60C 15/06

(54) **RUN FLAT TIRE**
NOTLAUFRINGREIFEN
PNEUMATIQUE DE ROULAGE À PLAT

(30) Priority: 09.03.2018 JP 2018042729
(43) Date of publication of application: 11.09.2019
(73) Proprietor: Sumitomo Rubber Industries, Ltd., Kobe-shi, Hyogo-ken 651-0072 (JP)
(72) Inventor: AOKI, Chieko, Kobe-shi, Hyogo 651-0072 (JP)
(74) Representative: Manitz Finsterwald Patent- und Rechtsanwaltspartnerschaft mbB

(56) References cited:
- EP-A1- 0 542 252
- EP-A1- 0 922 593
- EP-A1- 3 059 102
- US-A- 4 023 608
- US-B1- 6 439 283

## Description

### BACKGROUND OF THE INVENTION

### Field of the Invention

The present invention relates to a run flat tire that enables running even in a punctured state.

### Description of the Background Art

Conventionally, run flat tires in which side-reinforcing rubber layers each having a substantially crescent-shaped cross section are disposed inward of a carcass at sidewall portions, have been known.

For example, Japanese Patent No. 2015-098198 discloses a run flat tire in which a first apex and a second apex are disposed inward and outward of a turned-up portion of a carcass in a tire axial direction, respectively.

However, in the above-described run flat tire, when a curbstone or a pothole is overrun, excessive tensile force instantaneously acts in the carcass, whereby the carcass may suffer a damage called a pinch cut.

### SUMMARY OF THE INVENTION

The present invention is made in view of the aforementioned circumstance, and a main object of the present invention is to provide a run flat tire capable of inhibiting damage to a carcass by reducing tensile force in the carcass when overrunning a pothole, a curbstone, or the like.

The present invention is a run flat tire including: a carcass extending, through a tread portion and a pair of sidewall portions, between bead cores respectively embedded in a pair of bead portions; side-reinforcing rubber layers each having a crescent-shaped cross section and respectively disposed in the pair of sidewall portions; and bead apex rubbers disposed outward of a pair of the bead cores in a tire radial direction and extending in the tire radial direction so as to be tapered. Each bead apex rubber includes a first bead apex rubber extending from the corresponding bead core outward in the tire radial direction, and a second bead apex rubber disposed outward of the first bead apex rubber in a tire axial direction. The carcass includes a first carcass ply composed of a layer of a first carcass cord, and a second carcass ply composed of a layer of a second carcass cord. Each of the first carcass ply and the second carcass ply includes a body portion extending between the bead cores so as to form a toroidal shape, and turned-up portions connected to the body portion and each turned up around the corresponding bead core from an inner side to an outer side in the tire axial direction. Each turned-up portion of the first carcass ply extends in the tire radial direction through an outer side, in the tire axial direction, of the second bead apex rubber, and each turned-up portion of the second carcass ply extends in the tire radial direction so as to pass between the first bead apex rubber and the second bead apex rubber.

In the run flat tire according to the present invention, the body portion of the first carcass ply preferably extends on an inner side, in the tire axial direction, of each side-reinforcing rubber layer.

In the run flat tire according to the present invention, the body portion of the second carcass ply preferably extends on an outer side, in the tire axial direction, of each side-reinforcing rubber layer.

In the run flat tire according to the present invention, in a state where the run flat tire is mounted on a normal rim and inflated to a normal internal pressure and no load is applied to the run flat tire, an outer end, in the tire radial direction, of the turned-up portion of the first carcass ply is preferably positioned tire-radially outward of an outer end, in the tire radial direction, of a rim flange of the normal rim.

In the run flat tire according to the present invention, the outer end, in the tire radial direction, of the turned-up portion of the first carcass ply is preferably positioned tire-radially outward of a tire maximum width position.

The run flat tire according to the present invention preferably further includes a belt layer disposed, inside the tread portion, outward of the carcass in the tire radial direction. The outer end, in the tire radial direction, of the turned-up portion of the first carcass ply is preferably positioned tire-axially inward of an outer end, in the tire axial direction, of the belt layer.

In the run flat tire according to the present invention, an outer end, in the tire radial direction, of the turned-up portion of the second carcass ply is preferably positioned tire-axially inward of the outer end, in the tire radial direction, of the turned-up portion of the first carcass ply.

In the run flat tire according to the present invention, an outer end, in the tire radial direction, of the second bead apex rubber is preferably positioned tire-radially outward of an outer end, in the tire radial direction, of the first bead apex rubber.

In the run flat tire according to the present invention, the outer end, in the tire radial direction, of the first bead apex rubber is preferably positioned tire-radially outward of an inner end, in the tire radial direction, of the corresponding side-reinforcing rubber layer.

In the run flat tire according to the present invention, a number of the layers of the first carcass ply is preferably greater than a number of the layers of the second carcass ply.

In the run flat tire according to the present invention, the bead apex rubber includes the first bead apex rubber extending from the bead core outward in the tire radial direction, and the second bead apex rubber disposed outward of the first bead apex rubber in the tire axial direction. The turned-up portion of the first carcass ply extends in the tire radial direction through the outer side, in the tire axial direction, of the second bead apex rubber. Accordingly, when a curbstone or a pothole is overrun, tensile force in the turned-up portion, of the first carcass ply, positioned outward of the second bead apex rubber in the tire axial direction is reduced, whereby damage is inhibited. In addition, the turned-up portion of the second carcass ply extends in the tire radial direction so as to pass between the first bead apex rubber and the second bead apex rubber. Accordingly, deformation of the bead apex rubber when the internal pressure is reduced is suppressed, whereby the run flat durability is improved.

### BRIEF DESCRIPTION OF THE DRAWINGS

FIG. 1 is a tire meridian cross-sectional view, including a rotational axis, of a run flat tire in a normal state according to an embodiment; and
FIG. 2 is a cross-sectional view showing deformation from a sidewall portion to a bead portion when the run flat tire in FIG. 1 overruns a pothole.

### DESCRIPTION OF THE PREFERRED EMBODIMENTS

Hereinafter, an embodiment of the present invention will be described with reference to the drawings.

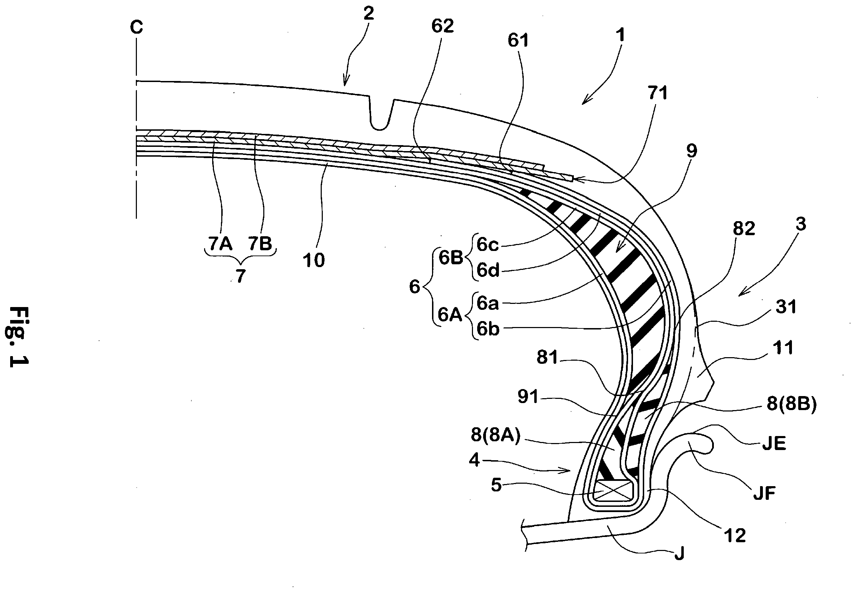

FIG. 1 is a tire meridian cross-sectional view, including a rotational axis, of a run flat tire 1 in a normal state according to the present embodiment.

The "normal state" refers to a state where the tire is mounted on a normal rim and inflated to a normal internal pressure and no load is applied to the tire. Hereinafter, unless otherwise specified, the dimension and the like of each portion of the tire are values measured in this normal state.

The "normal rim" refers to a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In a case where the tire is for passenger cars, the normal internal pressure is 180 kPa.

The run flat tire 1 according to the present embodiment includes: a carcass 6 extending, through a tread portion 2 and a pair of sidewall portions 3, between bead cores 5 respectively embedded in a pair of bead portions 4; bead apex rubbers 8; and side-reinforcing rubber layers 9 for reinforcing the sidewall portions 3.

The carcass 6 includes a first carcass ply 6A composed of a layer obtained by covering a first carcass cord with a topping rubber, and a second carcass ply 6B composed of a layer obtained by covering a second carcass cord with a topping rubber. For the first carcass cord and the second carcass cord, for example, organic fibers of a polyester, a rayon, or the like are used. In the present embodiment, the first carcass cord and the second carcass cord are disposed so as to be tilted relative to a tire equator C at an angle of, for example, 75° to 90°.

The first carcass ply 6A includes a body portion 6a extending between the bead cores 5 so as to form a toroidal shape, and turned-up portions 6b connected to the body portion 6a and each turned up around the corresponding bead core 5 from an inner side to an outer side in a tire axial direction. Similarly, the second carcass ply 6B includes a body portion 6c extending between the bead cores 5 so as to form a toroidal shape, and turned-up portions 6d connected to the body portion 6c and each turned up around the corresponding bead core 5 from the inner side to the outer side in the tire axial direction.

The bead cores 5 are each formed by, for example, a spirally wound bead wire made of steel being covered with rubber, and are disposed in the pair of bead portions 4. The bead core 5 in the present embodiment is formed so as to have a substantially rectangular cross section.

The bead apex rubber 8 includes a first bead apex rubber 8A and a second bead apex rubber 8B. The first bead apex rubber 8A extends from the bead core 5 outward in the tire radial direction. The first bead apex rubber 8A is disposed between the body portion 6a and the turned-up portion 6b of the first carcass ply 6A. The second bead apex rubber 8B is disposed outward of the first bead apex rubber 8A in the tire axial direction.

The side-reinforcing rubber layer 9 is disposed in the sidewall portion 3 and formed so as to have a substantially crescent-shaped cross section. The side-reinforcing rubber layer 9 is disposed so as to extend from a shoulder portion of the tread portion 2 through the sidewall portion 3 to the bead portion 4. The side-reinforcing rubber layer 9 supports, together with the carcass 6, a load when the internal pressure is reduced, thereby suppressing deformation of the tire.

An inner liner layer 10 made of air-impermeable rubber is formed inward of the carcass 6, that is, on an inner cavity surface of the tire. Since the side-reinforcing rubber layer 9 suppresses the deformation of the tire, damage due to friction of the inner liner layer 10 is inhibited, whereby run-flat running is enabled.

The turned-up portion 6b of the first carcass ply 6A extends from the inner side to the outer side in the tire radial direction through the outer side, in the tire axial direction, of the second bead apex rubber 8B. The turned-up portion 6d of the second carcass ply 6B extends from the inner side to the outer side in the tire radial direction so as to pass between the first bead apex rubber 8A and the second bead apex rubber 8B.

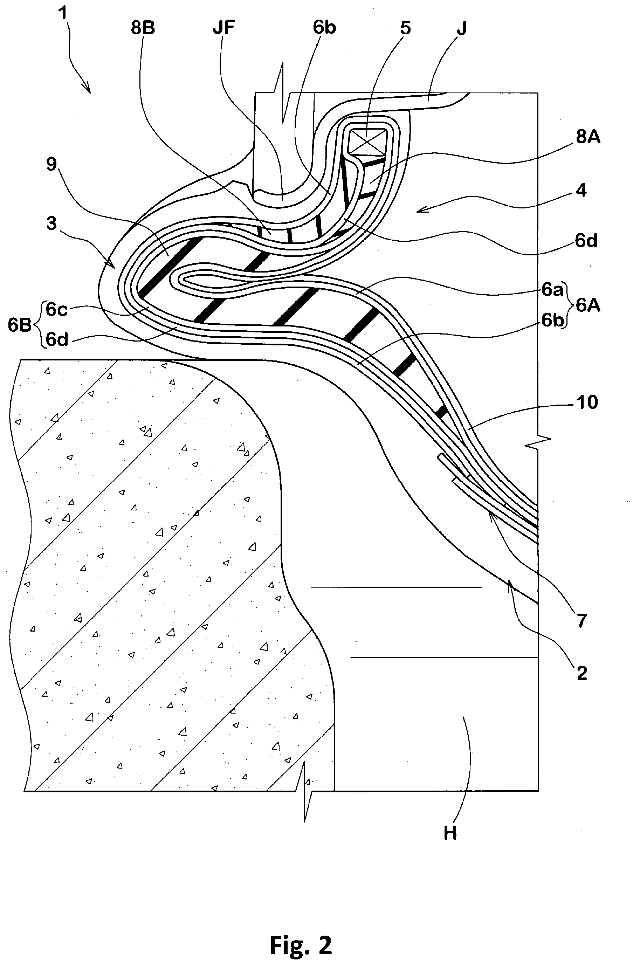

FIG. 2 shows deformation from the sidewall portion 3 to the bead portion 4 when the run flat tire 1 overruns a pothole H. When a portion, of the run flat tire 1, from the tread portion 2 to the sidewall portion 3 runs over an end edge part of the pothole H, the sidewall portion 3 is greatly deformed, and the bead portion 4 is deformed outward in the tire axial direction along a rim flange JF of a normal rim J. Owing to the deformation, great tensile force is instantaneously applied to the carcass 6 at the bead portion 4, whereby the carcass 6 may be broken.

However, in the run flat tire 1 according to the present embodiment, since the turned-up portion 6b of the first carcass ply 6A extends in the tire radial direction through the outer side, in the tire axial direction, of the second bead apex rubber 8B, tensile force in the turned-up portion 6b of the first carcass ply 6A is reduced, whereby damage to the turned-up portion 6b is inhibited.

In addition, the turned-up portion 6d of the second carcass ply 6B extends in the tire radial direction so as to pass between the first bead apex rubber 8A and the second bead apex rubber 8B. Such a turned-up portion 6d suppresses deformation of the bead apex rubber 8 when the internal pressure is reduced, whereby deformation of the bead portion 4 is suppressed. Accordingly, the run flat durability of the run flat tire 1 is improved.

In the run flat tire disclosed in the above-described Japanese Patent No. 2015-098198, when the above-described pothole H is overrun, great tensile force is instantaneously applied to a body portion of a carcass ply disposed outward of a side-reinforcing rubber layer in the tire axial direction, whereby the body portion may be broken.

However, in the run flat tire 1 according to the present embodiment, since the body portion 6a of the first carcass ply 6A extends on the inner side, in the tire axial direction, of the side-reinforcing rubber layer 9, tensile force in the body portion 6a of the first carcass ply 6A when the pothole H is overrun is reduced, whereby damage to the body portion 6a is inhibited.

On the other hand, the body portion 6c of the second carcass ply 6B extends on the outer side, in the tire axial direction, of the side-reinforcing rubber layer 9. When the internal pressure is reduced, sufficient tensile force is generated by such a body portion 6c together with the side-reinforcing rubber layer 9 so as to support a load, whereby deformation of the sidewall portion 3 is suppressed. Accordingly, the run flat durability of the run flat tire 1 is improved.

In the run flat tire 1 including the first carcass ply 6A and the second carcass ply 6B having the body portions 6a and 6c disposed so as to establish the above-described positional relationship with respect to the side-reinforcing rubber layer 9, the number of the layers of the first carcass ply 6A is preferably greater than the number of the layers of the second carcass ply 6B. Such a run flat tire 1 reduces tensile force in the second carcass ply 6B when overrunning the above-described pothole H, whereby damage to the second carcass ply 6B is inhibited. In addition, even if the second carcass ply 6B has suffered damage, high internal-pressure maintaining performance is exhibited.

As shown in FIG. 1, in the run flat tire 1 in the normal state, an outer end 61, in the tire radial direction, of the turned-up portion 6b of the first carcass ply 6A is preferably positioned tire-radially outward of an outer end JE, in the tire radial direction, of the rim flange JF of the normal rim J. Owing to such a turned-up portion 6b, the bead portion 4 is sufficiently strengthened, and damage to the turned-up portion 6b when the pothole H is overrun is inhibited.

In the run flat tire 1 in the normal state, the outer end 61, in the tire radial direction, of the turned-up portion 6b of the first carcass ply 6A is preferably positioned tire-radially outward of a tire maximum width position 31. Such a turned-up portion 6b suppresses deformation at the tire maximum width position 31 at which bending becomes great when the internal pressure is reduced, whereby the run flat durability is increased. In addition, a portion from the bead portion 4 to the sidewall portion 3 is sufficiently strengthened, whereby the damage to the turned-up portion 6b when the pothole H is overrun is further inhibited. The tire maximum width position 31 refers to a position that is defined from a tire cross-sectional contour shape (indicated by an alternate long and two short dashes line in FIG. 1) excluding a character, a pattern, a rim protector 11, and the like provided on the sidewall portion 3 in the normal state.

As shown in FIG. 1, the run flat tire 1 further includes a belt layer 7 disposed, inside the tread portion 2, outward of the carcass 6 in the tire radial direction.

In the present embodiment, the belt layer 7 is composed of belt plies 7A and 7B, on the inner and outer sides in the tire radial direction, in which belt cords made of steel are arranged so as to be tilted relative to the tire equator C at, for example, about 10 to 35°. The belt plies 7A and 7B are stacked on each other such that the above-described belt cords intersect with each other so as to firmly tighten the carcass 6, whereby the rigidity of the tread portion 2 is increased. The belt ply 7A on the inner side has a larger width than the belt ply 7B on the outer side, and thus defines outer ends 71 of the belt layer 7. For the belt cords, a highly elastic organic fiber material such as an aramid or a rayon can be used as necessary instead of the steel material.

A band layer may be disposed outward of the belt layer 7 in the tire radial direction. The band layer is composed of at least one band ply in which organic fiber cords are arranged so as to be tilted relative to the tire circumferential direction at a small angle, e.g., not larger than 10°. As the band ply, either a jointless band formed by spirally winding a band cord or a ribbon-shaped belt-like ply, or a band ply obtained by splicing plies, may be used.

The outer end 61, in the tire radial direction, of the turned-up portion 6b of the first carcass ply 6A is preferably positioned tire-axially inward of the outer end 71, in the tire axial direction, of the belt layer 7. Such a turned-up portion 6b suppresses deformation of a portion, from the bead portion 4 to the shoulder portion, at which bending becomes great when the internal pressure is reduced, whereby the run flat durability is increased. In addition, a portion extending from the bead portion 4 through the sidewall portion 3 to the shoulder portion of the tread portion 2, is sufficiently strengthened, whereby the damage to the turned-up portion 6b when the pothole H is overrun is further inhibited.

An outer end 62, in the tire radial direction, of the turned-up portion 6d of the second carcass ply 6B is preferably positioned tire-axially inward of the outer end 61, in the tire radial direction, of the turned-up portion 6b of the first carcass ply 6A. Owing to such a second carcass ply 6B, deformation of the tire when the internal pressure is reduced is suppressed, whereby the run flat durability is improved.

Furthermore, an outer end 82, in the tire radial direction, of the second bead apex rubber 8B is preferably positioned tire-radially outward of an outer end 81, in the tire radial direction, of the first bead apex rubber 8A. Owing to such a relationship between the first bead apex rubber 8A and the second bead apex rubber 8B, a region in which the body portion 6a and the turned-up portion 6b of the first carcass ply 6A are in direct contact without the first bead apex rubber 8A therebetween, is easily enlarged. Accordingly, deformation of the bead apex rubber 8 when the internal pressure is reduced is suppressed, whereby deformation of the tire is further suppressed.

Moreover, the outer end 81, in the tire radial direction, of the first bead apex rubber 8A is preferably positioned tire-radially outward of an inner end 91, in the tire radial direction, of the side-reinforcing rubber layer 9. Owing to such a first bead apex rubber 8A, deformation of the bead apex rubber 8 when the internal pressure is reduced is suppressed, whereby deformation of the tire is suppressed.

As shown in FIG. 1, the run flat tire 1 includes clinch rubbers 12 each disposed outward of the corresponding bead apex rubber 8 in the tire axial direction. The second bead apex rubber 8B and the clinch rubber 12 are joined via the turned-up portion 6b of the first carcass ply 6A.

If a complex elastic modulus E*s of a crosslinked rubber of the second bead apex rubber 8B and a complex elastic modulus E*c of a crosslinked rubber of the clinch rubber 12 are greatly different from each other, breakage and separation easily occur so as to originate from the boundary between the second bead apex rubber 8B, the turned-up portion 6b, and the clinch rubber 12. On the other hand, in a tire in which the ratio E*c/E*s between the complex elastic modulus E*s and the complex elastic modulus E*c is close to 1.00, the bead portion 4 has excellent durability. From the above-described standpoints, the ratio E*c/E*s is preferably not less than 0.55, more preferably not less than 0.75, and particularly preferably not less than 0.90. In addition, the ratio E*c/E*s is preferably not greater than 1.25, more preferably not greater than 1.15, and particularly preferably not greater than 1.10.

The first bead apex rubber 8A, the turned-up portion 6d of the second carcass ply 6B, and the second bead apex rubber 8B are integrally deformed. If a complex elastic modulus E*f of a crosslinked rubber of the first bead apex rubber 8A and the complex elastic modulus E*s of the crosslinked rubber of the second bead apex rubber 8B are greatly different from each other, breakage and separation easily occur among the first bead apex rubber 8A, the turned-up portion 6d, and the second bead apex rubber 8B. On the other hand, in a tire in which the ratio E*f/E*s between the complex elastic modulus E*f and the complex elastic modulus E*s is close to 1.00, the bead portion 4 has excellent durability. From the above-described standpoints, the ratio E*f/E*s is preferably not less than 0.75, more preferably not less than 0.80, and particularly preferably not less than 0.90. In addition, the ratio E*f/E*s is preferably not greater than 1.28, more preferably not greater than 1.20, and particularly preferably not greater than 1.10.

Moreover, in the run flat tire 1 in which the complex elastic modulus E*s of the crosslinked rubber of the second bead apex rubber 8B is greater than the complex elastic modulus E*f of the crosslinked rubber of the first bead apex rubber 8A, tensile force in the body portion 6a of the first carcass ply 6A, and the body portion 6c and the turned-up portion 6d of the second carcass ply 6B, is reduced when the pothole H is overrun, whereby damage to the first carcass ply 6A and the second carcass ply 6B is inhibited.

In the run flat tire 1 in which a complex elastic modulus E*r of a crosslinked rubber of the side-reinforcing rubber layer 9 is great, vertical deformation in a punctured state is suppressed. From this standpoint, the complex elastic modulus E*r of the side-reinforcing rubber layer 9 is preferably not less than 5.0 MPa, more preferably not less than 6.0 MPa, and particularly preferably not less than 7.2 MPa. On the other hand, the run flat tire 1 in which the complex elastic modulus E*r of the crosslinked rubber of the side-reinforcing rubber layer 9 is low, provides excellent ride comfort in a normal state. From this standpoint, the complex elastic modulus E*r is preferably not greater than 13.5 MPa, more preferably not greater than 12.0 MPa, and particularly preferably not greater than 10.5 MPa.

Although the run flat tire and the manufacturing method therefor according to the present invention have been described above in details, the present invention is not limited to the above-described specific embodiment, and various modifications can be made within the scope of the appended claims to practice the present invention.

### [Examples]

Run flat tires each having the basic structure in FIG. 1 and a size of 245/40R19 were prepared as samples based on the specifications in Table 1, and each sample tire was tested for the run flat durability and the pinch cut resistance. Main common specifications and test methods for each sample tire are as follows.
Material for first carcass cord: rayon
Material for second carcass cord: rayon
Material for belt cord: steel

### <Run Flat Durability>

By using a drum type tire testing machine, running with each sample tire was performed under the following conditions, and a running distance until an abnormal noise was generated from the tire, was measured. The results are indicated as an index with the running distance of Comparative Example 1 being regarded as 100. The larger the numerical value of the index is, the more favorable the run flat durability is. The upper limit of the running distance is 1.3 times the running distance of Comparative Example 1.
Rim: 19×8.5 J
Speed: 80 km/h
Internal pressure: 0 kPa (with a valve core being removed)
Vertical load: 6.57 kN
Drum radius: 1.7 m

### <Pinch Cut Resistance>

The sample tires were mounted on the above-described rims and inflated to an internal pressure of 240 kPa, and the tires on the rims were mounted to four wheels of a FR car which was produced in Japan and had an engine displacement of 2500 cc. A projection made of iron was formed on a lateral side of a test road so as to have a height of 110 mm, a width of 100 mm, and a length of 1500 mm, and projection-overrunning tests were performed in which the above-described car to which the sample tires had been mounted under the above-described conditions was caused to approach the projection at an angle of 15° relative to the length direction of the projection and overrun the projection. In doing so, the approaching speed was successively increased from 15 km/h by 1 km/h at each step. The speed at which a puncture was generated, is indicated as an index with the result of Comparative Example 1 being regarded as 100. The larger the numerical value of the index is, the more favorable the pinch cut resistance is.

**[Table 1]**

| | Comparative Example | Example 1 | Example 2 | Example 3 | Example 4 | Example 5 | Example 6 |
|---|---|---|---|---|---|---|---|
| First carcass ply | Not provided | One layer | One layer | One layer | One layer | One layer | One layer |
| Second carcass ply | One layer | One layer | One layer | Two layers | One layer | One layer | One layer |
| Turned-up portion of first carcass ply | Not provided | Outward of second bead apex rubber | Outward of second bead apex rubber | Outward of second bead apex rubber | Outward of second bead apex rubber | Outward of second bead apex rubber | Outward of second bead apex rubber |
| Tumed-up portion of second carcass ply | Between first bead apex rubber and second bead apex rubber | Between first bead apex rubber and second bead apex rubber | Between first bead apex rubber and second bead apex rubber | Between first bead apex rubber and second bead apex rubber | Between first bead apex rubber and second bead apex rubber | Between first bead apex rubber and second bead apex rubber | Between first bead apex rubber and second bead apex rubber |
| Body portion of first carcass ply | Not provided | Inward of side-reinforcing rubber layer | Outward of side-reinforcing rubber layer | Inward of side-reinforcing rubber layer | Inward of side-reinforcing rubber layer | Inward of side-reinforcing rubber layer | Inward of side-reinforcing rubber layer |
| Body portion of second carcass ply | Outward of side-reinforcing rubber layer | Outward of side-reinforcing rubber layer | Outward of side-reinforcing rubber layer | Outward of side-reinforcing rubber layer | Outward of side-reinforcing rubber layer | Outward of side-reinforcing rubber layer | Outward of side-reinforcing rubber layer |
| Outer end of turned-up portion of first carcass ply | Not provided | Tire-axially inward of outer end of belt layer | Tire-axially inward of outer end of belt layer | Tire-axially inward of outer end of belt layer | Between tire maximum width position and outer end of belt layer | Between tire maximum width position and radially outer end of flange | Inward of radially outer end of flange |
| Run flat durability (index) | 100 | 110 | 115 | 115 | 105 | 102 | 102 |
| Pinch cut resistance (index) | 100 | 120 | 110 | 130 | 115 | 112 | 110 |

As is apparent from Table 1, the run flat durability and the pinch cut resistance of the run flat tire of each Example were confirmed to be significantly improved as compared to those of the Comparative Example.

## Claims

1. A run flat tire (1) comprising:
a carcass (6) extending, through a tread portion (2) and a pair of sidewall portions (3), between bead cores (5) respectively embedded in a pair of bead portions (4);
side-reinforcing rubber layers (9) each having a crescent-shaped cross section and respectively disposed in the pair of sidewall portions (3); and
bead apex rubbers (8) disposed outward of a pair of the bead cores (5) in a tire radial direction and extending in the tire radial direction so as to be tapered, wherein
each bead apex rubber (8) includes
a first bead apex rubber (8A) extending from the corresponding bead core (5) outward in the tire radial direction, and
a second bead apex rubber (8B) disposed outward of the first bead apex rubber (8A) in a tire axial direction,
**characterised in that** the carcass (6) includes
a first carcass ply (6A) composed of a layer of a first carcass cord, and
a second carcass ply (6B) composed of a layer of a second carcass cord, each of the first carcass ply (6A) and the second carcass ply (6B) includes
a body portion (6a, 6c) extending between the bead cores (5) so as to form a toroidal shape, and
turned-up portions (6b, 6d) connected to the body portion (6a, 6c) and each turned up around the corresponding bead core (5) from an inner side to an outer side in the tire axial direction,
each turned-up portion (6b) of the first carcass ply (6A) extends in the tire radial direction through an outer side, in the tire axial direction, of the second bead apex rubber (8B), and
each turned-up portion (6d) of the second carcass ply (6B) extends in the tire radial direction so as to pass between the first bead apex rubber (8A) and the second bead apex rubber (8B).

2. The run flat tire (1) according to claim 1, wherein
the body portion (6a) of the first carcass ply (6A) extends on an inner side, in the tire axial direction, of each side-reinforcing rubber layer (9).

3. The run flat tire (1) according to claim 1 or 2, wherein
the body portion (6c) of the second carcass ply (6B) extends on an outer side, in the tire axial direction, of each side-reinforcing rubber layer (9).

4. The run flat tire (1) according to any one of claims 1 to 3, wherein,
in a state where the run flat tire (1) is mounted on a normal rim (J) and inflated to a normal internal pressure and no load is applied to the run flat tire (1), an outer end (61), in the tire radial direction, of the turned-up portion (6b) of the first carcass ply (6A) is positioned tire-radially outward of an outer end (JE), in the tire radial direction, of a rim flange (JF) of the normal rim (J).

5. The run flat tire (1) according to claim 4, wherein
the outer end (61), in the tire radial direction, of the turned-up portion (6b) of the first carcass ply (6A) is positioned tire-radially outward of a tire maximum width position (31).

6. The run flat tire (1) according to claim 5, further comprising a belt layer (7) disposed, inside the tread portion (2), outward of the carcass (6) in the tire radial direction, wherein
the outer end (61), in the tire radial direction, of the turned-up portion (6b) of the first carcass ply (6A) is positioned tire-axially inward of an outer end (71), in the tire axial direction, of the belt layer (7).

7. The run flat tire (1) according to claim 6, wherein
an outer end (62), in the tire radial direction, of the turned-up portion (6d) of the second carcass ply (6B) is positioned tire-axially inward of the outer end (61), in the tire radial direction, of the turned-up portion (6b) of the first carcass ply (6A).

8. The run flat tire (1) according to any one of claims 1 to 7, wherein
an outer end (82), in the tire radial direction, of the second bead apex rubber (8B) is positioned tire-radially outward of an outer end (81), in the tire radial direction, of the first bead apex rubber (8A).

9. The run flat tire (1) according to claim 8, wherein
the outer end (81), in the tire radial direction, of the first bead apex rubber (8A) is positioned tire-radially outward of an inner end (91), in the tire radial direction, of the corresponding side-reinforcing rubber layer (9).

10. The run flat tire (1) according to claim 2, wherein
a number of the layers of the first carcass ply (6A) is greater than a number of the layers of the second carcass ply (6B).

## Patentansprüche

1. Notlaufreifen (1), umfassend:
eine Karkasse (6), die sich durch einen Laufflächenabschnitt (2) und ein Paar Seitenwandabschnitte (3) zwischen Wulstkernen (5) erstreckt, die jeweils in ein Paar Wulstabschnitte (4) eingebettet sind;
Seitenverstärkungs-Gummischichten (9), die jeweils einen halbmondförmigen Querschnitt aufweisen und jeweils in dem Paar Seitenwandabschnitten (3) angeordnet sind; und
Wulstkernreitergummis (8), die in einer radialen Richtung des Reifens außen von einem Paar der Wulstkerne (5) angeordnet sind und sich so in der radialen Richtung des Reifens erstrecken, dass sie sich verjüngen,
wobei jeder Wulstkernreitergummi (8) umfasst
einen ersten Wulstkernreitergummi (8A), der sich von dem entsprechenden Wulstkern (5) in der radialen Richtung des Reifens nach außen erstreckt, und
einen zweiten Wulstkernreitergummi (8B), der in einer axialen Richtung des Reifens außen von dem ersten Wulstkernreitergummi (8A) angeordnet ist,
**dadurch gekennzeichnet, dass** die Karkasse (6) umfasst
eine erste Karkasslage (6A), die aus einer Schicht eines ersten Karkasskords zusammengesetzt ist, und
eine zweite Karkasslage (6B), die aus einer Schicht eines zweiten Karkasskords zusammengesetzt ist,
eine jede von der ersten Karkasslage (6A) und der zweiten Karkasslage (6B) umfasst
einen Körperabschnitt (6a, 6c), der sich zwischen den Wulstkernen (5) so erstreckt, dass er eine toroidale Form bildet, und
Umschlagabschnitte (6b, 6d), die mit dem Körperabschnitt (6a, 6c) verbunden und jeweils in der axialen Richtung des Reifens um den entsprechenden Wulstkern (5) von einer Innenseite zu einer Außenseite umgeschlagen sind,
ein jeder Umschlagabschnitt (6b) der ersten Karkasslage (6A) sich in der radialen Richtung des Reifens durch eine in der axialen Richtung des Reifens äußere Seite des zweiten Wulstkernreitergummis (8B) erstreckt, und
ein jeder Umschlagabschnitt (6d) der zweiten Karkasslage (6B) sich so in der radialen Richtung des Reifens erstreckt, dass er zwischen dem ersten Wulstkernreitergummi (8A) und dem zweiten Wulstkernreitergummi (8B) verläuft.

2. Notlaufreifen (1) nach Anspruch 1, wobei sich der Körperabschnitt (6a) der ersten Karkasslage (6A) auf einer in der axialen Richtung des Reifens inneren Seite einer jeden Seitenverstärkungs-Gummischicht (9) erstreckt.

3. Notlaufreifen (1) nach Anspruch 1 oder 2, wobei sich der Körperabschnitt (6c) der zweiten Karkasslage (6B) auf einer in der axialen Richtung des Reifens äußeren Seite einer jeden Seitenverstärkungs-Gummischicht (9) erstreckt.

4. Notlaufreifen (1) nach einem der Ansprüche 1 bis 3, wobei in einem Zustand, in dem der Notlaufreifen (1) auf eine normale Felge (J) aufgezogen und auf einen normalen Innendruck aufgepumpt ist und keine Last auf den Notlaufreifen (1) ausgeübt wird, ein in der radialen Richtung des Reifens äußeres Ende (61) des Umschlagabschnitts (6b) der ersten Karkasslage (6A) reifenradial außen von einem in der radialen Richtung des Reifens äußeren Ende (JE) eines Felgenhorns (JF) der normalen Felge (J) angeordnet ist.

5. Notlaufreifen (1) nach Anspruch 4, wobei das in der radialen Richtung des Reifens äußere Ende (61) des Umschlagabschnitts (6b) der ersten Karkasslage (6A) reifenradial außen von einer Position (31) maximaler Reifenbreite positioniert ist.

6. Notlaufreifen (1) nach Anspruch 5, ferner mit einer Gürtelschicht (7), die in der radialen Richtung des Reifens innen von dem Laufflächenabschnitt (2) außen von der Karkasse (6) angeordnet ist,
wobei das in der radialen Richtung des Reifens äußere Ende (61) des Umschlagabschnitts (6b) der ersten Karkasslage (6A) reifenaxial innen von einem in der axialen Richtung des Reifens äußeren Ende (71) der Gürtelschicht (7) positioniert ist.

7. Notlaufreifen (1) nach Anspruch 6, wobei ein äußeres Ende (62) in der radialen Richtung des Reifens des Umschlagabschnitts (6d) der zweiten Karkasslage (6B) reifenaxial innen von dem äußeren Ende (61) in der radialen Richtung des Reifens des Umschlagabschnitts (6b) der ersten Karkasslage (6A) positioniert ist.

8. Notlaufreifen (1) nach einem der Ansprüche 1 bis 7, wobei ein in der radialen Richtung des Reifens äußeres Ende (82) des zweiten Wulstkernreitergummis (8B) reifenradial außen von einem in der radialen Richtung des Reifens äußeren Ende (81) des ersten Wulstkernreitergummis (8A) positioniert ist.

9. Notlaufreifen (1) nach Anspruch 8, wobei das in der radialen Richtung des Reifens äußere Ende (81) des ersten Wulstkernreitergummis (8A) reifenradial außen von einem in der radialen Richtung des Reifens inneren Ende (91) der entsprechenden Seitenverstärkungs-Gummischicht (9) positioniert ist.

10. Notlaufreifen (1) nach Anspruch 2, wobei eine Anzahl der Schichten der ersten Karkasslage (6A) größer ist als eine Anzahl der Schichten der zweiten Karkasslage (6B).

## Revendications

1. Bandage pour roulage à plat (1) comprenant :
une carcasse (6) s'étendant, en traversant une portion formant bande de roulement (2) et une paire de portions formant parois latérales (3), entre des âmes de talons (5) respectivement noyées dans une paire de portions formant talons (4) ;
des couches de caoutchouc de renforcement latéral (9) ayant chacune une section transversale en forme de croissant et disposées respectivement dans la paire de portions formant parois latérales (3) ; et
des caoutchoucs de coiffe de talon (8) disposés à l'extérieur d'une paire des âmes de talons (5) dans une direction radiale du bandage et s'étendant dans la direction radiale du bandage de manière à être effilés, dans lequel chaque caoutchouc de coiffe de talon (8) inclut
un premier caoutchouc de coiffe de talon (8A) s'étendant depuis l'âme de talon (5) correspondante vers l'extérieur dans la direction radiale du bandage, et
un second caoutchouc de coiffe de talon (8B) disposé à l'extérieur du premier caoutchouc de coiffe de talon (8A) dans une direction axiale du bandage,
**caractérisé en ce que** la carcasse (6) inclut
une première nappe de carcasse (6A) composée d'une couche d'un premier câblé de carcasse, et
une seconde nappe de carcasse (6B) composée d'une couche d'un second câblé de carcasse,
chacune de la première nappe de carcasse (6A) et de la seconde nappe de carcasse (6B) incluant :
une portion de corps (6a, 6b) s'étendant entre les âmes de talons (5) de manière à former une forme toroïdale, et
des portions retroussées vers le haut (6b, 6d) connectées à la portion de corps (6a, 6c) et retroussées chacune vers le haut autour de l'âme de talon correspondante (5) depuis un côté intérieur jusqu'à un côté extérieur dans la direction axiale du bandage,
chaque portion retroussée vers le haut (6b) de la première nappe de carcasse (6A) s'étend dans la direction radiale du bandage en traversant un côté extérieur, dans la direction axiale du bandage, du second caoutchouc de coiffe de talon (8B), et
chaque portion retroussée vers le haut (6d) de la seconde nappe de carcasse (6B) s'étend dans la direction radiale du bandage de manière à passer entre le premier caoutchouc de coiffe de talon (8A) et le second caoutchouc de coiffe de talon (8B).

2. Bandage pour roulage à plat (1) selon la revendication 1, dans lequel la portion de corps (6a) de la première nappe de carcasse (6A) s'étend sur un côté intérieur, dans la direction axiale du bandage, de chaque couche de caoutchouc de renforcement latéral (9).

3. Bandage pour roulage à plat (1) selon la revendication 1 ou 2, dans lequel la portion de corps (6c) de la seconde nappe de carcasse (6B) s'étend sur un côté extérieur, dans la direction axiale du bandage, de chaque couche de caoutchouc de renforcement latéral (9).

4. Bandage pour roulage à plat (1) selon l'une quelconque des revendications 1 à 3, dans lequel
dans un état dans lequel le bandage pour roulage à plat (1) est monté sur une jante normale (J) et gonflé à une pression interne normale et qu'aucune charge n'est appliquée au bandage pour roulage à plat (1), une extrémité extérieure (61), dans la direction radiale du bandage, de la portion retroussée vers le haut (6b) de la première nappe de carcasse (6A) est positionnée, radialement par rapport au bandage, vers l'extérieur d'une extrémité extérieure (JE), dans la direction radiale du bandage, d'une bride de jante (JF) de la jante normale (J).

5. Bandage pour roulage à plat (1) selon la revendication 4, dans lequel l'extrémité extérieure (61), dans la direction radiale du bandage, de la portion retroussée vers le haut (6b) de la première nappe de carcasse (6A) est positionnée, radialement par rapport au bandage, vers l'extérieur d'une position en largeur maximum (31) du bandage.

6. Bandage pour roulage à plat (1) selon la revendication 5, comprenant en outre une couche de ceinture (7) disposée, à l'intérieur de la portion formant bande de roulement (2), vers l'extérieur de la carcasse (6) dans la direction radiale du bandage, dans lequel
l'extrémité extérieure (61), dans la direction radiale du bandage, de la portion retroussée vers le haut (6b) de la première nappe de carcasse (6A) est positionnée, axialement par rapport au bandage, vers l'intérieur d'une extrémité extérieure (71), dans la direction axiale du bandage, de la couche de ceinture (7).

7. Bandage pour roulage à plat (1) selon la revendication 6, dans lequel une extrémité extérieure (62), dans la direction radiale du bandage, de la portion retroussée vers le haut (6d) de la seconde nappe de carcasse (6B) et positionnée, axialement par rapport au bandage, vers l'intérieur de l'extrémité extérieure (61), dans la direction radiale du bandage, de la portion retroussée vers le haut (6b) de la première nappe de carcasse (6A).

8. Bandage pour roulage à plat (1) selon l'une quelconque des revendications 1 à 7, dans lequel
une extrémité extérieure (82), dans la direction radiale du bandage, du second caoutchouc de coiffe de talon (8B) est positionnée, radialement par rapport au bandage, vers l'extérieur d'une extrémité extérieure (81), dans la direction radiale du bandage, du premier caoutchouc de coiffe de talon (8A).

9. Bandage pour roulage à plat (1) selon la revendication 8, dans lequel l'extrémité extérieure (81), dans la direction radiale du bandage, du premier caoutchouc de coiffe de talon (8A) est positionnée, radialement par rapport au bandage, vers l'extérieur d'une extrémité intérieure (91), dans la direction radiale du bandage, de la couche de caoutchouc de renforcement latéral (9) correspondante.

10. Bandage pour roulage à plat (1) selon la revendication 2, dans lequel un nombre des couches de la première nappe de carcasse (6A) est plus grand qu'un nombre des couches de la seconde nappe de carcasse (6B).
